# EUROPÄISCHE PATENTANMELDUNG

(11) **EP 0 913 548 A2**
(43) Veröffentlichungstag der Anmeldung: **06.05.1999**
(21) Anmeldenummer: 98118723.0
(22) Anmeldetag: 02.10.1998
(51) Int. Cl.: E05B 49/00

(54) **Verfahren zum Betreiben eines Sicherungssystems**

(30) Priorität: 29.10.1997 DE 19747654
(71) Anmelder: TEMIC TELEFUNKEN microelectronic GmbH, 74072 Heilbronn (DE)
(72) Erfinder: Plaschko, Heinrich, 91126 Schwabach (DE); Kuhn, Mathias, 90542 Eckental (DE)
(74) Vertreter: Maute, Hans-Jürgen, Dipl.-Ing.

(57) **Zusammenfassung**

Eine durch einen Benutzer mittels einer Sendeeinheit (1) entsicherbare Sicherungseinrichtung (2) eines Sicherungssystems läßt sich mit der Sendeeinheit (1) auch durch unbefugte Benutzer entsichern. Das neue Verfahren soll auch bei einem Verlust oder Diebstahl der Sendeeinheit (1) nur berechtigten Benutzern den Zugriff auf ein durch das Sicherungssystem zu sicherndes Objekt (4) erlauben.

Die Sendeeinheit (1) erzeugt hierzu mittels eines Detektors (10), welcher körpereigene Merkmale des Benutzers, vorzugsweise einen Fingerabdruck, erfaßt, ein den Benutzer charakterisierendes Identifikationssignal (3), welches zur Sicherungseinrichtung (2) übertragen wird. Diese läßt sich daraufhin nur bei Gleichheit des Identifikationssignals (3) mit einem gespeicherten Identifikationssignal eines zur Entsicherung der Sicherungseinrichtung berechtigten Benutzers entsichern.

Das Verfahren bietet für abschließbare Objekte, insbesondere für Kraftfahrzeuge, einen hohen Diebstahl-/Einbruchschutz und für elektrische oder elektronische Geräte einen hohen Schutz vor unbefugter Benutzung.

## Beschreibung

Die Erfindung betrifft ein Verfahren gemäß dem Oberbegriff des Patentanspruchs 1.

Ein derartiges Verfahren ist beispielsweise aus der DE 35 07 389 A1 bekannt. Bei diesem Verfahren dient die Sicherungseinrichtung des Sicherungssystems dem Schutz verriegelbarer Objekte vor unbefugter Benutzung. Sie läßt sich durch ein Codesignal entsichern, welches von einer vom Benutzer am Körper getragenen Sendeeinheit ausgesendet wird und dieser Sendeeinheit fest zugeordnet ist. Der wesentliche Nachteil dieses Verfahrens besteht darin, daß der Schutz des zu sichernden Objektes bei einem Verlust oder Diebstahl der Sendeeinheit nicht mehr gewährleistet ist.

Der Erfindung liegt die Aufgabe zugrunde, ein Verfahren zum Betreiben eines Sicherungssystem gemäß dem Oberbegriff des Patentanspruchs 1 anzugeben, das auch bei einem Verlust oder Diebstahl der Sendeeinheit nur berechtigten Benutzern den Zugriff auf das zu sichernde Objekt erlaubt und das für den Benutzer möglichst einfach handhabbar ist.

Die Aufgabe wird durch die Merkmale im Kennzeichen des Patentanspruchs 1 gelöst. Vorteilhafte Ausgestaltungen und Weiterbildungen ergeben sich aus den Unteransprüchen.

Erfindungsgemäß wird anhand körpereigener Merkmale des Benutzers - vorzugsweise anhand eines seiner Fingerabdrücke - geprüft, ob für ihn eine Berechtigung zur Entriegelung der Sicherungseinrichtung, insbesondere einer elektronischen Wegfahrsperrvorrichtung und/oder einer elektrisch verriegelbaren Schließanlage eines zu sichernden Kraftfahrzeuges, besteht.

Die Sendeeinheit erzeugt hierzu mittels eines Detektors, der die körpereigenen Merkmale des Benutzers erfaßt, ein den Benutzer charakterisierendes Identifikationssignal - das Ausgangssignal des Detektors wird hierbei ggf. verschlüsselt. Das Identifikationssignal wird daraufhin vorzugsweise über eine drahtlose Übertragungsstrecke, beispielsweise als Funksignal, Infrarotsignal oder induktives Signal, zur Sicherungseinrichtung übertragen und dort mit gespeicherten Identifikationssignalen von Benutzern, die zur Entriegelung der Sicherungseinrichtung berechtigt sind, verglichen. Falls das von der Sendeeinheit erzeugte Identifikationssignal und eines der gespeicherten Identifikationssignale gleich sind, kann die Sicherungseinrichtung daraufhin entsichert werden.

Das zu schützende Objekt läßt sich zusätzlich durch ein mechanisches Schloß sichern, welches mittels eines passenden Schlüssels entriegelbar ist. Die Sendeeinheit ist dann vorteilhafterweise in den Griff dieses Schlüssels integriert, so daß für den Fall, daß mit dem Detektor Fingerabdrücke erfaßt werden, die Handhabung der Sendeeinheit sehr einfach ist. In diesem Fall sind neben der Betätigung des Schlüssels keine weiteren Handgriffe zur Identifizierung des Benutzers erforderlich.

Das Verfahren bietet einen hohen Diebstahl-/Einbruchschutz für abschließbare Objekte, beispielsweise für Kraftfahrzeuge, Panzerschränke oder Räume; es ist aber auch bestens zur Sicherung elektrischer oder elektronischer Geräte vor unbefugter Benutzung einsetzbar.

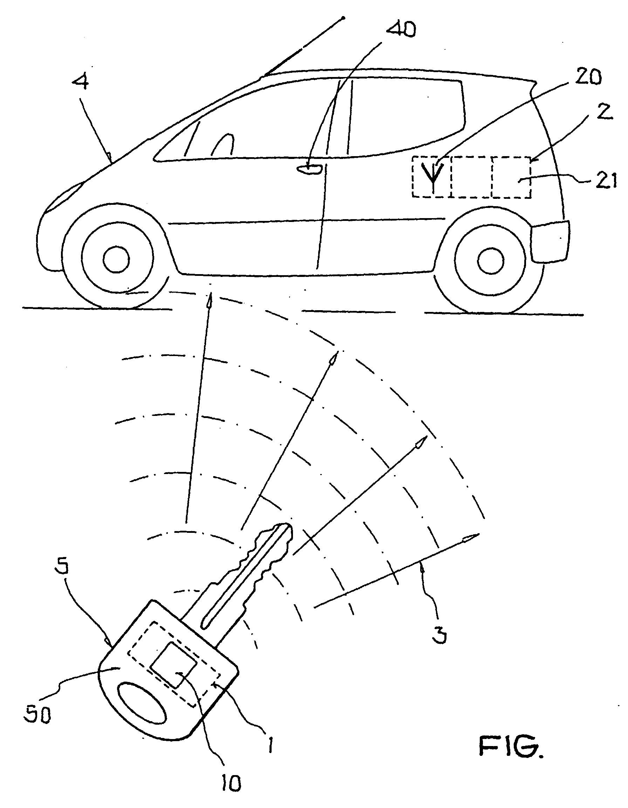

Die Erfindung wird im folgenden anhand eines Ausführungsbeispieles unter Bezugnahme auf die Figur näher beschrieben.

Gemäß der Figur ist das zu sichernde Objekt ein Kraftfahrzeug 4, das mit einem eine Sicherungseinrichtung 2 und eine Sendeeinheit 1 umfassenden Sicherungssystem vor unbefugter Benutzung geschützt werden soll. Der Schlüssel 5, der zur Entriegelung Schlösser der Fahrzeugtüren und des Zündschlosses vorgesehen ist, weist auf einer Oberflächenseite seines Griffes 50 einen Detektor 10 auf, welcher als Fingerabdruckdetektor zur Abtastung von Fingerabdrücken ausgeführt ist. Der Detektor 10 ist Teil einer in den Griff 50 integrierten Sendeeinheit 1, welche durch einen Benutzer durch Betätigung eines Schalters aktiviert wird. Dieser Schalter kann am Schlüssel 5 vorgesehen sein und wird beispielsweise durch Druck auf den Detektor 10 betätigt, er kann aber auch fahrzeugseitig am Türschloß 40 oder Zündschloß vorgesehen sein und wird in diesem Fall durch Einstecken des Schlüssels 5 in das Tür- bzw. Zündschloß oder durch Drehen des Schlüssels 5 diesem Schloß betätigt. Daraufhin wird von einer im Kraftfahrzeug 4 vorgesehenen Aktivierungseinheit ein Aktivierungssignal zur Sendeeinheit 1 ausgesendet, durch das diese aktiviert wird.

Im aktivierten Zustand erzeugt die Sendeeinheit 1 mittels des Detektors 10 aus einem Fingerabdruck des Benutzers ein den Benutzer charakterisierendes Identifikationssignal 3. Dieses wird über eine drahtlose Übertragungsstrecke zu einer im Kraftfahrzeug 4 vorgesehenen Empfangseinheit 20 der Sicherungseinrichtung 2 übertragen und dort mit in einem Speicher 21 gespeicherten Identifikationssignalen von ausgewählten Benutzern, d. h. von Benutzern, die zur Entsicherung der Sicherungseinrichtung 2 und zur Benutzung des Kraftfahrzeuges 4 berechtigt sind, verglichen. Falls das von der Sendeeinheit 1 erzeugte Identifikationssignal 3 gleich einem der gespeicherten Identifikationssignale ist, wird die Sicherungseinrichtung 2 daraufhin entsichert oder zur Entsicherung freigegeben. Bei der Sicherungseinrichtung 2 handelt es sich hierbei um eine elektronische Wegfahrsperrvorrichtung oder ein Zugangs- und Fahrberechtigungssystem, welches vorteilhafterweise sowohl das Starten des Kraftfahrzeuges 4 als auch das Entriegeln der Schlösser 40 der Fahrzeugtüren durch unbefugte Benutzer verhindert.

## Patentansprüche

1. Verfahren zum Betreiben eines Sicherungssystems mit einer durch einen Benutzer mittels einer Sendeeinheit (1) entsicherbaren Sicherungseinrichtung (2), dadurch gekennzeichnet,
- daß die Sendeeinheit (1) mittels eines Detektors (10) körpereigene Merkmale des Benutzers erfaßt und ein den Benutzer charakterisierendes Identifikationssignal (3) erzeugt,
- und das die Sicherungseinrichtung (2) nur bei Gleichheit des Identifikationssignals (3) mit einem gespeicherten Identifikationssignal eines zur Entsicherung der Sicherungseinrichtung (2) berechtigten Benutzers entsichert werden kann.

2. Verfahren nach Anspruch 1, dadurch gekennzeichnet, daß der Detektor (10) einen Fingerabdruck des Benutzers als körpereigene Merkmale des Benutzers erfaßt.

3. Verfahren nach Anspruch 1 oder 2, dadurch gekennzeichnet, daß das Identifikationssignal (3) über eine drahtlose Übertragungsstrecke von der Sendeeinheit (1) zur Sicherungseinrichtung (2) übertragen wird.

4. Verfahren nach Anspruch 3, dadurch gekennzeichnet, daß das Identifikationssignal (3) in der Sicherungseinrichtung (2) mit den in einem Speicher (21) der Sicherungseinrichtung (2) gespeicherten Identifikationssignalen verglichen wird.

5. Verfahren nach einem der vorherigen Ansprüche, dadurch gekennzeichnet, daß die Sendeeinheit (1) vom Benutzer durch Betätigung eines Schalters zur Erzeugung und Übertragung des Identifikationssignals (3) aktiviert wird.

6. Verfahren nach einem der vorherigen Ansprüche, dadurch gekennzeichnet, daß es zur Sicherung eines Kraftfahrzeuges (4) vor unbefugter Benutzung verwendet wird.

7. Verfahren nach Anspruch 6, dadurch gekennzeichnet, daß es zur Entsicherung einer elektronischen Wegfahrsperrvorrichtung und/oder einer elektrisch verriegelbaren Schließanlage des Kraftfahrzeuges (4) verwendet wird.

8. Sicherungssystem zur Durchführung des Verfahrens nach einem der vorherigen Ansprüche, dadurch gekennzeichnet, daß ein durch einen Schlüssel (5) entriegelbares Schloß (40) als zusätzliche Sicherungseinrichtung vorgesehen ist.

9. Sicherungssystem nach Anspruch 8, dadurch gekennzeichnet, daß die Sendeeinheit (1) in den Griff (50) des Schlüssels (5) integriert ist.
